# EUROPEAN PATENT APPLICATION

(11) **EP 4 497 799 A1**
(43) Date of publication of application: **29.01.2025**
(21) Application number: 24189334.6
(22) Date of filing: 18.07.2024
(51) Int. Cl.: C09K 5/04

(54) **HYDROCARBON REFRIGERANT GAS AS REPLACEMENT OF AN HFO OR HFC REFRIGERANT**

(30) Priority: 26.07.2023 US 202363528996 P; 18.09.2023 US 202318369250; 07.05.2024 US 202418657209
(71) Applicant: Thermofluid Technologies, Inc., Louisville, TN 37777 (US)
(72) Inventor: Brewer II, Floyd Eugene, Tennesse 37803 (US)
(74) Representative: Sawodny, Michael-Wolfgang

(57) **Abstract**

An instrument-grade, blended hydrocarbon refrigerant gas that can be utilized in both existing air conditioning systems and that is suitable for air conditioning systems in hybrid vehicles and EV's. The instrument-grade blended hydrocarbon refrigerant gas is a mix of propane and butane, either iso-butane or n-butane, at a selected ratio and serves as an environmentally friendly substitute for hydrofluoro refrigerant gases such as hydrofluorocarbon refrigerant gas and hydrofluoro-olefin refrigerant gas.

## Description

### CROSS-REFERENCE TO RELATED APPLICATIONS

This Non-Provisional Patent Application claims the benefit of U.S. Provisional Patent Application Number 63/528,996, filed on July 26, 2023, and U.S. Non-Provisional Patent Application, Serial No. 18/369,250, filed on September 18, 2023, each of which is incorporated herein in its entirety by reference.

### STATEMENT REGARDING FEDERALLY SPONSORED RESEARCH OR DEVELOPMENT

Not Applicable

### BACKGROUND OF THE INVENTION

### 1. Field of Invention

The invention relates to refrigerants used in air conditioning systems such as aerosol grade refrigerators, residential air conditioning systems, and air conditioning systems in vehicles, such as automobiles, trucks, and other types of motorized vehicles, hybrid vehicles, and electric vehicles, ("EV's"). More particularly, it relates to blended hydrocarbon, (hereinafter "HC"), refrigerant gases that can serve as replacement refrigerants for hydrofluorocarbon, (hereinafter "HFC"), refrigerants, such as R134a, and hydrofluoroolefin, (hereinafter "HFO") refrigerants, such as R1234yf, (HFC and HFO are collectively referred to herein as "Hydrofluoro Refrigerants" or "HFx Refrigerants").

### 2. Description of the Related Art

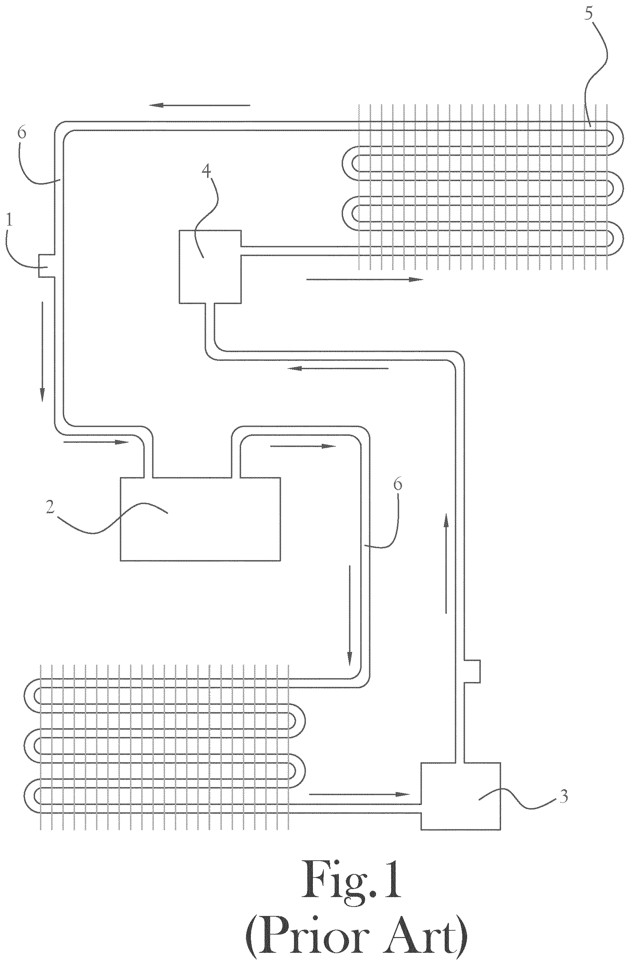

In the field of vehicles, such as, but not limited to, automobiles, cars, trucks, and other types of motorized vehicles, hybrid vehicles, and electric vehicles, it is known that that an air conditioning system removes humidity from, and cools, ambient air within the vehicle's cabin. In this regard, as schematically illustrated in **Fig. 1****,** it is known that a mobile air conditioning system, (hereinafter "MAC"), includes a low side tap **1,** a compressor **2,** typically a receiver dryer **3,** and expansion valve **4,** an evaporator **5,** and a fluid path **6,** such as various high pressure lines as will be appreciated by those skilled in the art. Refrigerant flows through the system as illustrated by the arrows. As is known by those skilled in the art, these types of MAC's, as well as the refrigerant systems in refrigerators and residential air conditioning systems, utilize various refrigerants. In this regard, prior to 1996, R-12, a Chlorofluorocarbon, (hereinafter "CFC"), was the prominent refrigerant in mobile air conditioning systems. As is known in the art, in 1996, due to concerns about the impact of CFC's on the environment, CFC's were replaced by HFC's such as R134a. Because HFC's, like CFC's are known to be powerful greenhouse gases, beginning in 2015, the use of HFC's such as R134a was phased out and such HFC's were replaced with HFO's such as R-1234fy.

The transition from HFC's such as R134a to HFO's such as R1234yf in the automotive industry has been driven by the need to address environmental concerns and reduce the impact of HFCs on climate change. While R1234yf is generally considered a more environmentally friendly refrigerant with a lower global warming potential, (R1234yf has a 100-year GWP of less than one compared to R134a's 100-year GWP of 1,430), this switch is not without its challenges. One of the major concerns is the compatibility of R1234yf with existing equipment and infrastructure designed for R134a. The physical properties of R1234yf differ significantly from R134a, which can lead to system performance issues, potential leaks, and the need for modifications in order to ensure safe and efficient operation. As a result, the industry has been grappling with the costs and complexities of retrofitting existing systems or designing new ones to accommodate R1234yf.

Moreover, while HFO's are not considered to be greenhouse gases and have a negligible contribution to global warming, HFO's are now believed to have other deleterious effects on the environment. For instance, the transition to R1234yf has raised concerns about the increase in the atmospheric burden of trifluoroacetic acid, ("TFA"), which is a part of the large group of between 4,000 and 12,000 chemicals that are considered to be "forever chemicals". R1234yf has a unique degradation pathway in the atmosphere, where it can break down into TFA, a long-lived and stable compound. While TFA is not a potent greenhouse gas, its accumulation in the environment can lead to unintended consequences. Studies have shown that TFA can be washed out of the atmosphere and deposited onto land and water bodies, potentially impacting ecosystems and agricultural practices. Indeed, recent studies have suggested that the switch from R134a to R1234yf has resulted in a significant increase, a nearly 35-fold increase, in the global atmospheric burden of TFA. As a result, a growing number of worldwide governments are now moving to significantly restrict the production and use of both HFC's and HFO's.

Additionally, the push to transition from internal combustion engine vehicles to hybrid vehicles and EV's creates additional concerns. Namely, the air conditioning systems of normal, internal combustion engine vehicles could utilize what are commonly referred to as aerosol grade refrigerants. However, hybrid vehicles and EV's increasingly require very pure, and very dry instrument-grade refrigerants that meet AHRI Standards 700 specifications for refrigerants, especially regarding moisture and impurities, and should not include any ethane. This is a result of the fact that these vehicles utilize high voltage electrical systems to energize the components of the air conditioning system such as the compressor. However, traditional refrigerants often contain a hygroscopic additive, Polyalkylene Glycol, ("PAG"), a synthetic oil used to lubricate the compressor. These hybrid and EV systems require refrigerants that are PAG free, and which often use a non-conductive Polyolester, ("POE"), oil to lubricate the compressor.

What is missing in the art, is an instrument-grade blended HC refrigerant gas that can be utilized in both existing air conditioning systems and that is suitable for air conditioning systems in hybrid vehicles and EV's.

### BRIEF SUMMARY OF THE INVENTION

The present invention is directed towards an instrument-grade, blended HC refrigerant gas that can be utilized in both existing air conditioning systems and that is suitable for air conditioning systems in hybrid vehicles and EV's. The present invention is also directed towards a method of recharging various air conditioning and/or chilling systems, with a blended HC refrigerant gas.

Further the invention also discloses a method for replacing a hydrofluoro refrigerant in an air conditioning system with an instrument-grade hydrocarbon refrigerant gas. This method is described in claim 1 of the set of claims.

Beside the method for replacing the hydrofluoro refrigerant gas according to claim 1, the invention also discloses an instrument-grade blended hydrocarbon refrigerant gas according to claim 7. Special developments of the method and the instrument-graded hydrocarbon refrigerant gas are matter of the subclaims.

### BRIEF DESCRIPTION OF THE SEVERAL VIEWS OF THE DRAWINGS

The above-mentioned features of the invention will become more clearly understood from the following detailed description of the invention read together with the drawings in which:
FIG. 1 (Prior Art) is a schematic view of an exemplary state-of-the-art air conditioning system;
FIG. 2 is a schematic model of the molecular structure of propane;
FIG. 3 is a schematic model of the molecular structure of iso-butane;

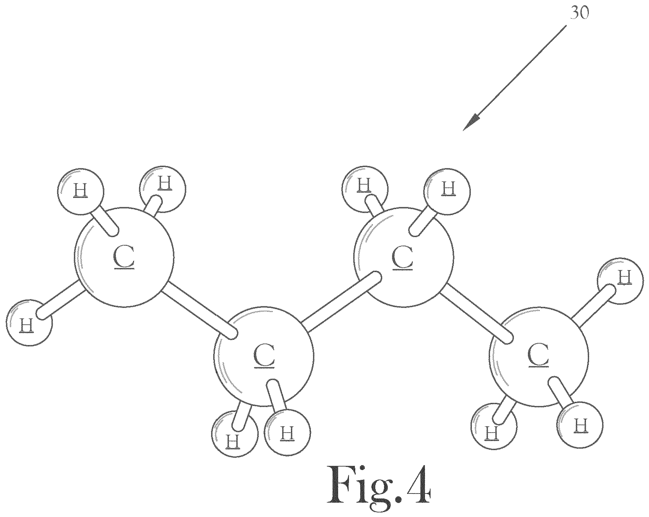

FIG. 4 is a schematic model of the molecular structure of n-butane; and
FIG. 5 is a flow chart showing the steps of the method of the present invention.

### DETAILED DESCRIPTION OF THE INVENTION

The present invention is directed towards an instrument-grade, blended HC refrigerant gas that can be utilized in various air conditioning and/or chilling systems, such as the refrigerant systems in refrigerators, especially aerosol grade refrigerators, residential air conditioning systems, and the air conditioning systems utilized in motorized, hybrid, and electric vehicles, systems as a replacement for state-of-the-art Hydrofluro Refrigerants and that can be utilized in new chilling and air conditioning systems that require an instrument-grade refrigerant. In order to be useful as a refrigerant and be a suitable replacement for Hydrofluoro Refrigerants, a blended HC refrigerant must have a comparable boiling point. As is known in the art, at normal atmospheric pressure, the boiling point of R134a is approximately - 26.3°C, (-15.3°F), and the boiling point of R1234yf is approximately -29.8°C, (-21.6°F). Further, it is known that the boiling point of propane, C₃H₈, see 10 in Fig. 1, at normal atmospheric pressure is approximately -42.1°C, (-43.8°F).

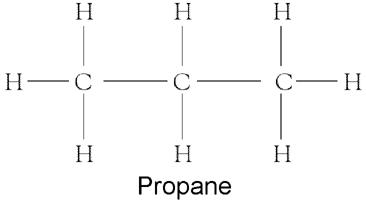

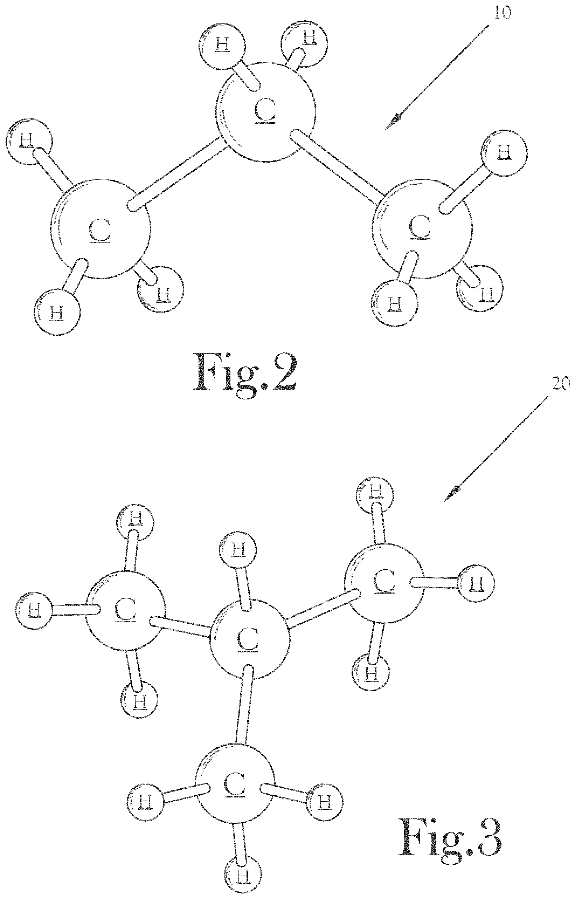

Further, the boiling point of iso-butane, C₄H₁₀, see **20** in **Fig. 2****,** at normal atmospheric pressure is approximately -11.7°C (10.9°F).

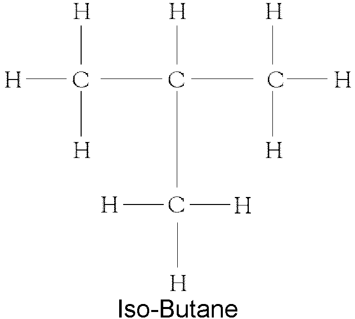

Finally, the boiling point of *n*-butane, C₄H₁₀, see **30** in **Fig. 3****,** at normal atmospheric pressure, is approximately -0.5°C, (31.1°F).

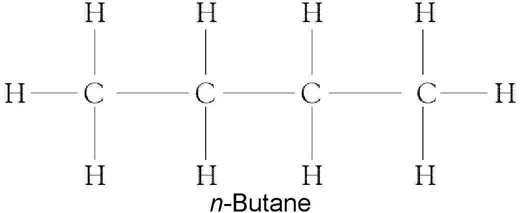

By blending refrigerant grade propane, R290, and refrigerant grade butane, either *n*-butane, R600, or iso-butane, R600a together, a suitable blended HC refrigerant gas, with a suitable boiling point, can be attained. Moreover, a blended HC refrigerant gas will produce less electrical draw on the MAC system than R134a, R1234fy, or other aerosol grade HFx Refrigerants.

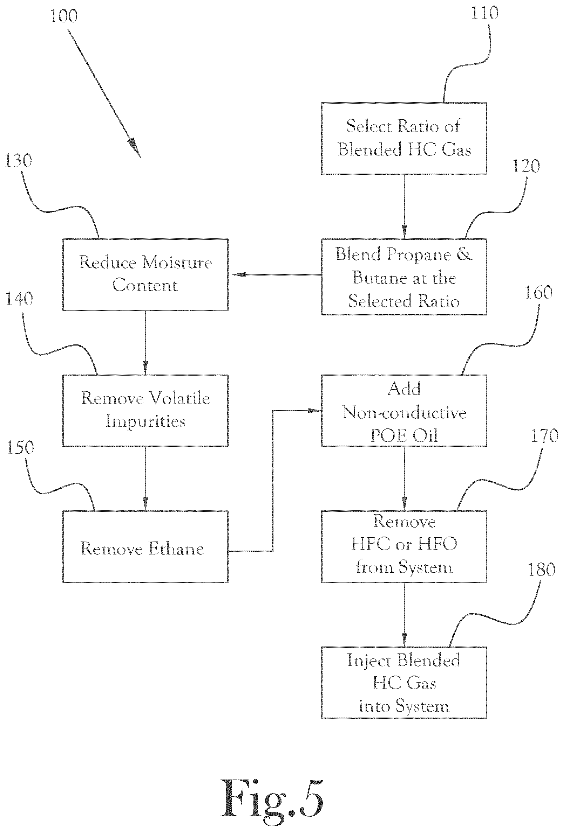

Referring to **Fig. 5****,** in order to replace an HFC such as R134a, whether for a new system or in an existing system, an HC gas blend of R290 and either R600 or R600a is created as in accordance with method **100.** First, as at step 110, a ratio of blended HC gas is selected. In an exemplary embodiment, a blend of approximately 50% R290 to approximately 50% R600 or R600a is utilized. It will be appreciated that the percentages expressed herein are by liquid volume. While this is the preferred ratio, the acceptable range is approximately 50% to 80% R290 and approximately 20% to 50% of either R600 or R600A.

In order to replace an HFO, such as R1234yf, whether for a new system or in an existing system, an HC gas blend of R290 and either R600 or R600a is created as follows. In an exemplary embodiment, approximately 70% R290 is blended with approximately 30% either R600 or R600a. While this an exemplary ratio, the acceptable range is approximately 70% to 90% R290 and approximately 10% to 30% either R600 or R600A. Once the desired ratio is selected, the R290 and either R600 or R600A are blended at step **120.**

With replacement of an HFx Refrigerant, either the HFC, R134a, or the HFO, R1234yf, the blended HC refrigerant gas is preferably instrument-grade and must meet AHRI 700 Standards for refrigerants, especially with regard to water and impurities. In this regard, the moisture content must be reduced below 5% and preferably below 10mg/kg at step **130.** Further, all other volatile impurities must be reduced below 0.5 percent by weight at step **140.** Additionally, ethane must be removed at step **150.** Those skilled in the art will recognize that these steps could be performed by means of a fractionator. Those skilled in the art will recognize that there are also other methods for removing ethane and for drying the blended HC refrigerant gas. Additionally, a drying agent could be added to the HC refrigerant gas blend. It will be appreciated that the step of drying and reducing water content to AHRI 700 Standard and removing ethane could be performed on the constituent HC gases prior to the step of blending the constituent HC gases or could be performed on the HC refrigerant gas blend. Finally, a non-conductive synthetic oil, such as Polyolester Oil is added at step **160** to lubricate the compressor of the air conditioning system. It should be understood that only a non-conductive POE oil should be utilized to provide for lubrication of the compressor.

In order to replace an aerosol grade HFx Refrigerant with the instrument-grade HC blend described herein, the aerosol grade HFx Refrigerant is carefully removed from the system with a reclaiming machine, at step **170,** taking care not to release any of the aerosol grade HFx Refrigerant to the atmosphere. The instrument-grade blended HC refrigerant gas replacement is then injected into the system at step **180.**

While the present invention has been illustrated by description of several embodiments and while the illustrative embodiments have been described in detail, it is not the intention of the applicant to restrict or in any way limit the scope of the appended claims to such detail. Additional modifications will readily appear to those skilled in the art. The invention in its broader aspects is therefore not limited to the specific details, representative apparatus and methods, and illustrative examples shown and described. Accordingly, departures may be made from such details without departing from the spirit or scope of applicant's general inventive concept. The invention comprises aspects, which are disclosed in the sentences below, which are part of the description but not claims in accordance with J 15/88 of the Boards of Appeal.

### SENTENCES

1. An instrument-grade blended hydrocarbon refrigerant gas for replacing a hydrofluoro refrigerant gas in an air conditioning system, wherein said blended hydrocarbon refrigerant gas comprises:
   an instrument-grade propane in a selected amount by liquid volume, said instrument-grade propane having less than a 5 percent moisture content and having less than 0.5 percent by weight volatile impurities;
   instrument-grade butane in a selected amount by liquid volume, said instrument-grade butane having less than a 5 percent moisture content and having less than 0.5 percent by weight volatile impurities; and
   a non-conductive synthetic lubricant.
2. The instrument-grade blended hydrocarbon refrigerant gas of sentence 1 wherein said instrument-grade blended hydrocarbon refrigerant gas further comprises a drying agent.
3. The instrument-grade blended hydrocarbon refrigerant gas of sentence 1 or 2 wherein said instrument-grade blended hydrocarbon refrigerant gas is formulated to replace a hydrofluorocarbon refrigerant gas, wherein said instrument-grade blended hydrocarbon gas is approximately 50% to 80% propane by liquid volume and approximately 20% to 50% butane by liquid volume.
4. The instrument-grade blended hydrocarbon refrigerant gas of sentence 3 wherein said instrument-grade blended hydrocarbon refrigerant gas is formulated to replace a hydrofluorocarbon refrigerant gas, wherein said instrument-grade blended hydrocarbon gas is approximately 50% propane by liquid volume and approximately 50% butane by liquid volume.
5. The instrument-grade blended hydrocarbon refrigerant gas of sentence 3 or 4 wherein said instrument-grade butane is iso-butane.
6. The instrument-grade blended hydrocarbon refrigerant gas of one of the sentences 3 to 4 wherein said instrument-grade butane is n-butane.
7. The instrument-grade blended hydrocarbon refrigerant gas of at least one of the sentence 1 to 6 wherein said instrument-grade blended hydrocarbon refrigerant gas is formulated to replace a hydrofluoroolefin refrigerant gas, wherein said instrument-grade blended hydrocarbon gas is approximately 70% to 90% propane by liquid volume and approximately 10% to 30% butane by liquid volume.
8. The instrument-grade blended hydrocarbon refrigerant gas of sentence 7 wherein said instrument-grade blended hydrocarbon refrigerant gas is formulated to replace a hydrofluoroolefin refrigerant gas, wherein said instrument-grade blended hydrocarbon gas is approximately 70% propane by liquid volume and approximately 30% butane by liquid volume.
9. The instrument-grade blended hydrocarbon refrigerant gas of sentence 8 wherein said instrument-grade butane is iso-butane.
10. The instrument-grade blended hydrocarbon refrigerant gas of sentence 7 or 8 wherein said instrument-grade butane is n-butane.
11. The instrument-grade blended hydrocarbon refrigerant gas of at least one of the sentences 1 to 10 wherein said non-conductive synthetic oil is a polyolester oil.
12. A method for replacing a hydrofluoro refrigerant in an air conditioning system with an instrument-grade hydrocarbon refrigerant gas, said method comprising the steps:
   selecting a ratio of propane and butane by liquid volume wherein said ratio is selected based on a type of hydrofluoro refrigerant gas being replaced;
   reducing a moisture content of said propane and said butane below 5% by weight;
   reducing volatile impurities below 0.5 percent by weight;
   removing ethane from said propane and from said butane;
   removing a hydrofluoro refrigerant from said system with a reclaiming machine so as not to release any of said hydrofluoro refrigerant to the atmosphere;
   injecting said blended instrument-grade blended hydrocarbon refrigerant gas into said air conditioning system.
13. The method for replacing a hydrofluoro refrigerant in an air conditioning system with an instrument-grade hydrocarbon refrigerant gas of sentence 12, said method further comprising the step of reducing said moisture content below 10mg/kg.
14. The method for replacing a hydrofluoro refrigerant in an air conditioning system with an instrument-grade hydrocarbon refrigerant gas of sentence 12 or 13, said method further comprising the step of adding a non-conductive synthetic oil to a compressor of said air conditioning system to lubricate said compressor of said air conditioning system.
15. The method for replacing a hydrofluoro refrigerant in an air conditioning system with an instrument-grade hydrocarbon refrigerant gas of sentence 14 wherein said non-conductive synthetic oil is a polyolester oil.
16. The method for replacing a hydrofluoro refrigerant in an air conditioning system with an instrument-grade hydrocarbon refrigerant gas of at least one of the sentences 12 to 15 wherein said steps of selecting said ratio of propane and butane by liquid volume, reducing said moisture content of said propane and said butane, reducing volatile impurities, and removing ethane from said propane and from said butane are performed on said propane and said butane individually and prior to blending said propane and said butane.
17. The method for replacing a hydrofluoro refrigerant in an air conditioning system with an instrument-grade hydrocarbon refrigerant gas of at least one of the sentences 12 to 16 wherein said steps of selecting said ratio of propane and butane by liquid volume, reducing said moisture content of said propane and said butane, reducing volatile impurities, and removing ethane from said propane and from said butane are performed subsequent to blending said selected ratio of said propane and said butane.

## Claims

1. A method for replacing a hydrofluoro refrigerant in an air conditioning system with an instrument-grade hydrocarbon refrigerant gas, said method comprising the steps:
selecting a ratio of propane and butane by liquid volume wherein said ratio is selected based on a type of hydrofluoro refrigerant gas being replaced;
reducing a moisture content of said propane and said butane below 5% by weight;
reducing volatile impurities below 0.5 percent by weight;
removing ethane from said propane and from said butane;
removing a hydrofluoro refrigerant from said system with a reclaiming machine so as not to release any of said hydrofluoro refrigerant to the atmosphere;
injecting said blended instrument-grade blended hydrocarbon refrigerant gas into said air conditioning system.

2. The method for replacing a hydrofluoro refrigerant in an air conditioning system with an instrument-grade hydrocarbon refrigerant gas of claim 1, said method further comprising the step of reducing said moisture content below 10mg/kg.

3. The method for replacing a hydrofluoro refrigerant in an air conditioning system with an instrument-grade hydrocarbon refrigerant gas of claims 1 or 2, said method further comprising the step of adding a non-conductive synthetic oil to a compressor of said air conditioning system to lubricate said compressor of said air conditioning system.

4. The method for replacing a hydrofluoro refrigerant in an air conditioning system with an instrument-grade hydrocarbon refrigerant gas of claim 3 wherein said non-conductive synthetic oil is a polyolester oil.

5. The method for replacing a hydrofluoro refrigerant in an air conditioning system with an instrument-grade hydrocarbon refrigerant gas of at least one of the claims 1 to 4 wherein said steps of selecting said ratio of propane and butane by liquid volume, reducing said moisture content of said propane and said butane, reducing volatile impurities, and removing ethane from said propane and from said butane are performed on said propane and said butane individually and prior to blending said propane and said butane.

6. The method for replacing a hydrofluoro refrigerant in an air conditioning system with an instrument-grade hydrocarbon refrigerant gas of at least one of the claims 1 to 5 wherein said steps of selecting said ratio of propane and butane by liquid volume, reducing said moisture content of said propane and said butane, reducing volatile impurities, and removing ethane from said propane and from said butane are performed subsequent to blending said selected ratio of said propane and said butane.

7. An instrument-grade blended hydrocarbon refrigerant gas for replacing a hydrofluoro refrigerant gas in an air conditioning system, wherein said blended hydrocarbon refrigerant gas comprises:
an instrument-grade propane in a selected amount by liquid volume, said instrument-grade propane having less than a 5 percent moisture content and having less than 0.5 percent by weight volatile impurities;
instrument-grade butane in a selected amount by liquid volume, said instrument-grade butane having less than a 5 percent moisture content and having less than 0.5 percent by weight volatile impurities; and
a non-conductive synthetic lubricant.

8. The instrument-grade blended hydrocarbon refrigerant gas of claim 7 wherein said instrument-grade blended hydrocarbon refrigerant gas further comprises a drying agent.

9. The instrument-grade blended hydrocarbon refrigerant gas of claim 7 or 8 wherein said instrument-grade blended hydrocarbon refrigerant gas is formulated to replace a hydrofluorocarbon refrigerant gas, wherein said instrument-grade blended hydrocarbon gas is approximately 35% to 80% instrument grade propane by liquid volume and approximately 20% to 65% instrument grade iso-butane by liquid volume.

10. The instrument-grade blended hydrocarbon refrigerant gas of one of the claims 7 to 9 wherein said instrument-grade blended hydrocarbon refrigerant gas is formulated to replace a hydrofluorocarbon refrigerant gas, wherein said instrument-grade blended hydrocarbon gas is approximately 40% to 80% instrument grade propane by liquid volume and approximately 20% to 60% instrument grade n-butane by liquid volume.

11. The instrument-grade blended hydrocarbon refrigerant gas of one of the claims 7 to 10 wherein said instrument-grade blended hydrocarbon refrigerant gas is formulated to replace a hydrofluorocarbon refrigerant gas, wherein said instrument-grade blended hydrocarbon gas is approximately 50% to 80% propane by liquid volume and approximately 20% to 50% butane by liquid volume.

12. The instrument-grade blended hydrocarbon refrigerant gas of at least one of the claims 7 to 11 wherein said instrument-grade blended hydrocarbon refrigerant gas is formulated to replace a hydrofluorocarbon refrigerant gas, wherein said instrument-grade blended hydrocarbon gas is approximately 50% propane by liquid volume and approximately 50% butane by liquid volume.

13. The instrument-grade blended hydrocarbon refrigerant gas of claim 11 or 12 wherein said instrument-grade butane is iso-butane and/or n-butane.

14. The instrument-grade blended hydrocarbon refrigerant gas of at least one of the claims 7 to 13 wherein said non-conductive synthetic lubricant is a polyolester oil.

15. The instrument-grade blended hydrocarbon refrigerant gas according to at least one of the claims 7 to 14,
**characterized in that**
the instrument-grade blended hydrocarbon refrigerant gas replaces a hydrofluoro refrigerant gas according to a method of at least one of the claims 1 to 6.
